# EUROPÄISCHE PATENTSCHRIFT

(11) **EP 3 844 946 B1**
(45) Veröffentlichungstag und Bekanntmachung des Hinweises auf die Patenterteilung: **16.04.2025**
(21) Anmeldenummer: 19755326.6
(22) Anmeldetag: 12.08.2019
(51) Int. Cl.: H04N 7/18, B60R 1/00

(54) **VERFAHREN UND ANORDNUNG ZUM ERZEUGEN EINER MIT BILDINFORMATIONEN TEXTURIERTEN UMFELDKARTE EINES FAHRZEUGS UND FAHRZEUG UMFASSEND EINE SOLCHE ANORDNUNG**
METHOD AND ARRANGEMENT FOR PRODUCING A SURROUNDINGS MAP OF A VEHICLE, TEXTURED WITH IMAGE INFORMATION, AND VEHICLE COMPRISING SUCH AN ARRANGEMENT
PROCÉDÉ ET ENSEMBLE DE GÉNÉRATION D'UNE CARTE D'ENVIRONNEMENT, TEXTURÉE DE DONNÉES IMAGE, D'UN VÉHICULE ET VÉHICULE POURVU D'UN TEL ENSEMBLE

(30) Priorität: 31.08.2018 DE 102018214874
(43) Veröffentlichungstag der Anmeldung: 07.07.2021
(73) Patentinhaber: Volkswagen AG, 38440 Wolfsburg (DE); AUDI AG, 85045 Ingolstadt (DE)
(72) Erfinder: URBAN, Alexander, 38518 Gifhorn (DE); MAIER, Georg, 85120 Hepberg (DE); ZIEBART, Sascha, 38104 Braunschweig (DE); SCHWITTERS, Frank, 38154 Königslutter (DE); SEITZ, Gordon, 38468 Ehra (DE)
(74) Vertreter: Patentanwälte Bressel und Partner mbB
(86) Internationale Anmeldenummer: PCT/EP2019/071631
(87) Internationale Veröffentlichungsnummer: WO 2020/043475

(56) Entgegenhaltungen:
- WO-A1-2017/108221
- DE-A1- 102013 214 369
- US-A1- 2016 049 078

## Beschreibung

Verfahren und Anordnung zum Erzeugen einer mit Bildinformationen texturierten Umfeldkarte eines Fahrzeugs und Fahrzeug umfassend eine solche Anordnung

Die Erfindung betrifft ein Verfahren und eine Anordnung zum Erzeugen einer mit Bildinformationen texturierten Umfeldkarte eines Fahrzeugs, insbesondere im Zusammenhang mit Parkvorgängen, und ein Fahrzeug umfassend eine solche Anordnung.

Das Verwenden von Bildinformationen zum Erzeugen von Umgebungsrepräsentationen in Fahrzeugen ist bekannt. Umgebungsrepräsentationen werden allgemein dafür verwendet, um einen Fahrer über eine aktuelle Betriebssituation des Fahrzeugs zu informieren und insbesondere dem Fahrer eine Darstellung der aktuellen Fahrzeugumgebung bereitzustellen. Dies kann z.B. mittels einer Anzeigeeinrichtung im Fahrzeuginnenraum erfolgen, auf der die Umgebungsrepräsentation angezeigt wird.

Im Stand der Technik existieren Ansätze, um Umgebungsrepräsentationen mittels fahrzeugmontierter Kameras zu erstellen. Die Umgebungsrepräsentation kann dabei nach Art einer sogenannten Top- oder Bird-View-Perspektive erstellt und angezeigt werden, in der zu Orientierungszwecken oftmals eine modellhafte Darstellung des Fahrzeugs selbst eingeblendet wird (beispielsweise in der Bildmitte). Anders ausgedrückt sind Umgebungsrepräsentationen bekannt, bei denen ein Modell des Fahrzeugs in Draufsicht sowie die Fahrzeugumgebung dargestellt werden, wobei die Fahrzeugumgebung anhand der erfassten Kamerabilder abgebildet wird. Eine solche Lösung wird von der Anmelderin unter der Bezeichnung "Area View" angeboten.

Die Umgebungsrepräsentation wird typischerweise aus von mehreren fahrzeugmontierten Kameraeinrichtungen erfassten Bildern zusammenzufügt. Hierfür sind Ansätze bekannt, bei denen eine (virtuelle) Projektionsleinwand erzeugt und die Bilder in diese Projektionsleinwand hineinprojiziert werden, wobei sich die Bilder mehrerer Kameras bei einer entsprechend gleichzeitigen Projektion zu der Umgebungsrepräsentation zusammensetzen. Die Projektion erfolgt dabei beispielsweise nach Maßgabe der bekannten Einbaupositionen und/oder Blickwinkel der Kameraeinrichtungen.

Die DE 10 2010 051 206 A1 offenbart in diesem Zusammenhang das Zusammenfügen mehrerer Teilbilder zu einem die Teilbilder überschreitenden größeren Bereich, wobei auch zusätzliche Symbole (sogenannte künstliche Bildelemente) eingeblendet werden können. Weiterer technologischer Hintergrund existiert in Form der DE 10 2015 002 438 A1, der DE 10 2013 019 374 A1, der DE 10 2016 013 696 A1 und der DE 603 18 339 T2.

Die WO 2007/108221 A1 offenbart das Erzeugen einer Mehrzahl von Videostreams mittels einer Mehrzahl von Videokameras eines Fahrzeugs, wobei die Videostreams zum Erzeugen eines virtuellen Kamerablickwinkels kombiniert werden. Werden Bereiche in dem Bild einer Kamera durch externe Objekte verdeckt, können diese verdeckten Bereiche durch Informationen aus einem Bild einer anderen Kamera ersetzt werden.

Weiterer technologischer Hintergrund findet sich in der US 2016/049078 A1 und der DE 10 2013 214 369 A1.

Es ist ferner bekannt, sogenannte Umfeldkarten für ein Fahrzeug zu erstellen, in denen Informationen zum Fahrzeugumfeld hinterlegt sind und insbesondere ortsbezogen hinterlegt sind (d. h. sich auf konkrete Orte innerhalb der Umfeld Karte beziehen). Die Informationen können von Sensoreinrichtungen des Fahrzeugs erfasst werden, beispielsweise sogenannten Umfeldsensoren. Diese können allgemein dazu eingerichtet sein, die Umgebung optisch, akustisch, per Ultraschall und/oder mittels Radar zu erfassen. Beispiele derartiger Sensoreinrichtungen sind (optische) Abstandsmesseinrichtungen, Radarsensoren, Liedersensoren oder Ultraschallsensoren. Die Umfeldkarte kann als Datei und/oder digitale Informationssammlung zum Beispiel in einer Steuereinrichtung des Fahrzeugs hinterlegt und laufend aktualisiert werden. Auch eine solche Umfeldkarte könnte prinzipiell dazu verwendet werden, um dem Fahrer eines Fahrzeugs eine Umgebungsrepräsentation anzuzeigen.

Es hat sich aber gezeigt, dass sich mit den bekannten Ansätzen nicht immer eine gewünschte Qualität (d. h. Realitätsnähe) der Umgebungsrepräsentation erzielen lässt.

Es stellt sich somit die Aufgabe, die Qualität einer Umgebungsrepräsentation für ein Fahrzeug zu verbessern.

Diese Aufgabe wird mit einem Verfahren gemäß dem beigefügten Anspruch 1, einer Anordnung gemäß dem beigefügten Anspruch 6 und einem Fahrzeug gemäß Anspruch 7 gelöst. Es versteht sich, dass die einleitend diskutierten Varianten und Merkmale allein oder in beliebiger Kombination auch bei der vorliegenden Erfindung vorgesehen sein können, sofern nicht anders angegeben oder ersichtlich.

Ein Grundgedanke der Erfindung besteht darin eine Umfeldkarte zum Beispiel mittels der vorstehend erläuterten Sensoreinrichtungen zu erstellen und diese mit von wenigstens einer Kameraeinrichtung erfassten Bildinformationen zu texturieren, wobei die texturierte Umfeldkarte als Umgebungsrepräsentation verwendet und einem Fahrer angezeigt werden kann. Insbesondere wenn die Umfeldkarte Informationen bezüglich einer dreidimensionalen Gestalt der Umgebung und/oder ein Höhenprofil der Umgebung enthält und/oder abbildet kann hierüber eine realitätsnahe Umgebungrepräsentation erzeugt werden.

Weiter besteht ein Grundgedanke der Erfindung darin, für das Texturieren der Umfeldkarte geeignete Bildinformationen bedarfsweise bzw. situationsgerecht auszuwählen. Beispielsweise wurde erkannt, dass während einer Fahrt (d. h. einer Fahrzeugbewegung in beliebige Richtungen mit einer von 0 km/h verschiedenen Geschwindigkeit und vorzugsweise unter Erzeugung einer Traktionskraft) und insbesondere bei Parkmanövern Umgebungsbereiche unterschiedlich innerhalb von Erfassungsbereichen von Kameraeinrichtungen des Fahrzeugs positioniert werden können bzw. innerhalb der Erfassungsbereiche bewegbar sind. Da die Erfassungsbereiche einer Kameraeinrichtung in der Regel in hochauflösende und niedrigauflösende Bereiche einteilbar sind, in denen entsprechend mehr oder weniger qualitative Bildinformationen erzeugbar sind, können für ein und denselben Umgebungsbereich somit während einer Fahrt sowohl hochqualitative als auch weniger qualitative Bildinformationen vorliegen. Gemäß einer Alternative schlägt die Erfindung deshalb vor, bei der Texturierung der Umfeldkarte unterschiedliche Qualitätsgrade von Bildinformationen, die sich auf ein und denselben Umgebungsbereich beziehen, zu berücksichtigen und insbesondere hochqualitative Bildinformationen für die Texturierung zu bevorzugen.

Erfindungsgemäß werden die aktuelleren Bildinformationen (spätestens) dann verwendet, wenn das Fahrzeug einen eine vorgegebenen Entfernungsschwellenwert zu dem wenigstens einen Bereich der Umfeldkarte unterschreitet. Insbesondere kann hierbei der Entfernungsschwellenwert in Fahrtrichtung betrachtet werden. Dem liegt der Gedanke zugrunde, dass fahrzeugmontierte Kameraeinrichtungen in der Regel nahe des Fahrzeugs einen hochauflösenden Erfassungsbereich aufweisen und mit zunehmendem Abstand vom Fahrzeug nur niedrig aufgelöste Bildinformationen erfassen können. Wird somit ein Entfernungsschwellenwert unterschritten, kann mit einer hohen Wahrscheinlichkeit und zum Beispiel durch entsprechende Wahl des Entfernungsschwellenwerts davon ausgegangen werden, dass der entsprechende Bereich in den hochauflösenden Erfassungsbereich gelangt ist. Somit kann sozusagen automatisch sichergestellt werden, dass Bildinformationen mit einer im Vergleich zu für die Texturierung bereits verwendeten Bildinformationen höheren Auflösung verwendet werden, beispielsweise ohne dass ein expliziter Vergleich der Auflösungen der genannten Bildinformationen erforderlich ist.

Ebenso wurde aber erkannt, dass in bestimmten Betriebssituationen das Verwenden von aktuellen Bildinformationen bevorzugt sein können, wenn Veränderungen in der Umgebung festgestellt werden und für ein realitätsnahes Abbilden der Umgebung die Umgebungsrepräsentation somit aktualisiert werden muss.

Weiter kann erfindungsgemäß vorgesehen sein, beide der oben genannten Auswahlkriterien zu berücksichtigen, jedoch eines hiervon standardmäßig zu bevorzugen. Beispielsweise können hochqualitative Bildinformationen zur Texturierung standardgemäß bevorzugt und ausgewählt werden, es sei denn, es liegen für den entsprechenden zu texturierenden Bereich aktuellere Bildinformationen vor.

Allgemein kann die texturierte Umfeldkarte eine Umgebungsrepräsentation sein oder als eine solche verwendet werden. Insbesondere kann es sich um eine in Form oder auf Basis von Bild- und/oder Videodateien erzeugte Umgebungsrepräsentation handeln. Diese Umgebungsrepräsentation kann auf einer Anzeigeeinrichtung anzeigbar sein, insbesondere in einem Fahrzeuginnenraum.

Die Umfeldkarte kann, wie vorstehend beschrieben, Eigenschaften der Umgebung abbilden und insbesondere deren Struktur und/oder Gestalt. Gemäß einer Variante umfassen die Umfeldkarte ein Höhenprofil der Umgebung, wobei es sich um ein vollständiges dreidimensionales Profil der Fahrzeugumgebung handeln kann. Zumindest sollte aber eine Erstreckung von Strukturen der Fahrzeugumgebung in vertikaler Raumrichtung erfasst werden bzw. in der Umfeldkarte hinterlegt und/oder abgebildet sein, wobei die vertikale Raumrichtung vorzugsweise orthogonal zum Fahrzeuguntergrund verläuft. Es versteht sich, dass die Ausmaße des erfassbaren Höhenprofils (oder auch des vollständigen dreidimensionalen Profils der Fahrzeugumgebung) z.B. durch die verwendeten Sensoreinrichtungen und deren Erfassungsbereiche beschränkt sein kann.

Allgemein kann die Umfeldkarte als Datei vorliegen und/oder eine digitale Informationssammlung sein, die zum Beispiel die Umgebung in Form einer (Mess-) Punktesammlung und/oder eines Gittermodells abbildet. Unter einem Texturieren kann das Abbilden der Bildinformationen auf die Umfeldkarte (zum Beispiel per virtueller Beziehung weise rechnergestützte Projektion) und/oder das Ausfüllen von Bereichen bzw. Oberflächen der Umfeldkarte mit dem Bildinformationen verstanden werden. Die Umfeldkarte kann somit im Sinne einer einleitend erläuterten Projektionsleinwand fungieren.

Bei den erfassten Bildinformationen kann es sich um Videoinformationen und/oder einen Video-Bilddatenstrom handeln. Entsprechend kann die Texturierung der Umfeldkarte fortlaufend aktualisiert und/oder erzeugt werden, beispielsweise durch fortlaufendes Einspeisen neuer (d.h. aktuell erfasster) Bildinformationen. Zum Erzeugen der Texturierung werden bei Verwenden von mit unterschiedlichen Kameraeinrichtungen erfassten Bildinformationen vorzugsweise zu gleichen Erfassungszeitpunkten erfasste bzw. aufgezeichnete Bildinformationen verwendet. Vorzugsweise werden die Bildinformationen mit wenigstens einer fahrzeugmontierten Kameraeinrichtung erfasst. Gemäß einer Variante können mindestens drei oder mindestens vier Kameraeinrichtungen vorgesehen sein, die beispielsweise um das Fahrzeug verteilt sein können, sodass vorzugsweise an jeder Fahrzeugseite (d.h. an der Vorder- und Rückseite sowie an den beiden äußeren, die Einstiegstüren umfassenden Seiten) Kameras vorgesehen sind. Folglich kann die Umfeldkarte einem Fahrer nach Art einer sogenannten "surround"- oder auch 360°-Ansicht angezeigt werden. Wie erwähnt, können die Bildinformationen in Form von Videodaten und/oder als Bild-Datenstrom bereitgestellt werden und die Kameraeinrichtungen können entsprechend als Videokameras ausgebildet sein.

Die Umfeldkarte kann zumindest teilweise auf Basis von mit wenigstens einer fahrzeugmontierten Sensoreinrichtung erfassten Informationen erzeugt werden, wobei es sich bei der fahrzeugmontierten Sensoreinrichtung vorzugsweise um eine von den Kameraeinrichtungen verschiedene Sensoreinrichtungen handelt. Insbesondere kann die Sensoreinrichtung dazu eingerichtet sein, die Fahrzeugumgebung nicht auf Basis von gemessenen Umgebungslichtintensitäten zu erfassen, wie bei Kameraeinrichtungen üblich. Beispielsweise kann es sich bei der Sensoreinrichtung um eine der folgenden handeln: eine Abstandsmesseinrichtung, eine Radareinrichtung, eine Lidareinrichtung, eine Ultraschalleinrichtung, eine optische Abstandsmesseinrichtung (beispielsweise basierend auf Laserstrahlung).

Die Umfeldkarte kann allgemein während einer Fahrt erzeugt werden und zum Beispiel eine Fahrstrecke von wenigstens 5 m, wenigstens 10 m, wenigstens 15 m oder wenigstens 20 m abdecken (d. h. die Umfeldkarte kann sich entlang einer solchen Fahrstrecke erstrecken). Nach Art eines Ringsspeichers oder auch dem sogenannten FIFO-Prinzip (First in First Out) können dann Bereiche der Umfeldkarte, die vorzugsweise entgegen der aktuellen Fahrtrichtung oder bezogen auf die aktuelle Fahrtrichtung hinter dem Fahrzeug liegen, gelöscht werden und können neue vorzugsweise in Fahrtrichtung liegende Bereiche der Umfeldkarte ergänzt werden. Dies kann durch entsprechendes Löschen und Ergänzen von Informationen für diese Bereiche erfolgen.

Weiter kann allgemein auch eine Position des Fahrzeugs innerhalb der Umfeldkarte ermittelt werden. Hierzu kann in an sich bekannter Weise auf Odometrieinformation zurückgegriffen werden, welche zum Beispiel Radbewegungen erfassen bzw. abbilden. Ferner kann ein Lenkwinkel und/oder eine Fahrzeugneigung erfasst und berücksichtigt werden. Ebenso kann auf Informationen von Navigationssystemen (insbesondere Ortungsinformationen) zurückgegriffen werden, wobei derartige Informationen beispielsweise auf Basis von GPS-Signalen erzeugt werden können. Bevorzugt wird jedoch eine Variante ohne Zuhilfenahme derartiger Informationen und insbesondere von GPS-Signalen, beispielsweise um unabhängig von aktuellen Empfangsbedingungen für derartige Signale zu sein.

Dies kann auch dahingehend ausgenutzt werden, als dass den von einer Kameraeinrichtung erfassten Bildinformationen ebenfalls entsprechende Ortsinformationen zugeordnet werden können. Hierbei ist vorteilhaft, wenn die Kameraeinrichtung gleichartig innerhalb dem Fahrzeug positioniert ist und bleibt (d. h. an einer gleich bleibenden Stelle darin positioniert und/oder gleichbleibend ausgerichtet ist und somit ein konstanten Blickwinkel aufweist). Darauf basierend kann zum Beispiel eine Fahrzeugposition in eine Position der Kameraeinrichtungen umgerechnet werden und/oder können den erfassten Bildinformationen entsprechender Ortsinformationen zugeordnet werden.

In analoger Weise können auch Bereichen der Umfeldkarte entsprechende Ortsinformationen zugeordnet werden, wobei beispielsweise auf eine Position der Sensoreinrichtung zum Erzeugen der Umfeldkarte (beispielsweise Abstandssensoren) zurückgegriffen werden kann und eine ermittelte Fahrzeugposition in eine Position der Sensoreinrichtung umgerechnet werden kann. Hiervon erfassten Informationen können dann ebenfalls mit Ortsinformationen versehen werden.

Allgemein können somit sowohl Bereiche der Umfeldkarte als auch erfasste Bildinformationen mit Ortsinformationen versehen sein, sodass auch ermittelt werden kann, welche Bildinformationen sich auf welche Bereiche der Umfeldkarte beziehen.

Allgemein können die hierin vorgestellte Lösung sich auf Parkvorgänge beziehen bzw. hierfür zum Einsatz kommen. Folglich kann die Lösung selektiv dann aktiviert oder ausgeführt werden, wenn ein Fahrer beispielsweise einen Parklückensuchvorgang oder anderweitige Assistenzfunktionen im Zusammenhang mit Parkvorgängen aktiviert oder allgemein Eingaben tätig, die auf einen Parkwunsch schließen lassen. Spätestens in diesem Fall kann die Umfeldkarte auch in der hierin geschilderten Weise erzeugt und/oder texturiert werden. Insbesondere kann spätestens in diesem Fall eine Fahrzeugortung innerhalb der Umfeldkarte erfolgen.

Ist eine Mehrzahl von Kameraeinrichtungen vorgesehen, kann vorgesehen sein, von diesen Kameraeinrichtungen insgesamt erfasste Bildinformationen zu berücksichtigen und vorzugsweise zu speichern und gemäß verschiedenen Kriterien daraus dann eine Auswahl bezüglich der Texturierung der Umfeldkarte zu betreffen. In diesem Fall kann es somit als unerheblich betrachtet werden, welche Kameraeinrichtungen welche Bildinformationen liefert, sondern können allein der Erfassungszeitpunkt der Bildinformationen (Aktualitätskriterium) oder die Auflösung der Bildinformationen (Auflösungskriterium) berücksichtigt werden.

Wie einleitend geschildert, können auch bei der genannten Kriterien berücksichtigt werden, jedoch in hierarchischer Form. Anders ausgedrückt kann ein Kriterium priorisiert werden, sofern nicht bestimmte Betriebssituation eintreten und/oder anderweitige Bedingungen erfüllt sind und dann eine Auswahl von Bildinformationen nach dem entsprechen anderen Kriterium erfolgt. Beispielsweise kann standardgemäß das Auflösungskriterium betrachtet werden, es sei denn, es wird eine Betriebssituation festgestellt, bei der das Berücksichtigen aktuellerer Bildinformationen bevorzugt wird. Dies kann zum Beispiel das Eintreten eines Objekts (zum Beispiel eines Fußgängers oder PKWs) in einen Erfassungsbereich der wenigstens einen Kameraeinrichtungen des Fahrzeugs betreffen, was mittels an sich bekannter Bildauswertealgorithmen erkannt werden kann.

Genauer gesagt sieht eine Weiterbildung vor, dass die aktuelleren Bildinformationen (spätestens) dann verwendet werden, wenn innerhalb des Bereichs eine Veränderung der Fahrzeugumgebung und/oder ein vorbestimmtes Objekt in der Fahrzeugumgebung erkannt wird.

Wenn der Entfernungsschwellenwert vorzugsweise in Fahrtrichtung betrachtet wird kann ferner sichergestellt werden, dass nur diejenigen Bereiche der Umfeldkarte mit neuen Bildinformationen überschrieben werden, die vorher noch entfernt von dem Fahrzeug angeordnet waren und somit voraussichtlich nur mit einer niedrigen Auflösung erfasst wurden. Insbesondere kann vorgesehen sein, den Entfernungsschwellenwert oder auch allgemeine Entfernungsabhängigkeiten ausschließlich in Fahrtrichtung zu betrachten und vor allem nicht entgegen der Fahrtrichtung. In letzterem Fall kann nämlich der umgekehrte Fall eintreten, dass zunächst nahe zu dem Fahrzeug positioniert und somit hochauflösend erfasste Bereiche in einer zunehmenden Entfernung von dem Fahrzeug angeordnet werden. Es kann folglich verhindert werden, dass die Umfeldkarte mit später erfassten niedrigaufgelösten Bildinformationen überschrieben wird, da sich die entsprechenden Bereiche dann voraussichtlich in einem größeren Abstand zum Fahrzeug und auch in einem niedrigauflösenden Erfassungsbereich der Kameraeinrichtungen befinden.

Gemäß einer weiteren Ausführungsform kann eine Mehrzahl von Kameraeinrichtungen vorhanden sein und können die ersten und zweiten Bildinformationen von unterschiedlichen Kameraeinrichtungen erfasst werden. In diesem Zusammenhang können die jeweiligen Erfassungsbereiche der Kameraeinrichtungen zu weniger als 50% deckungsgleich sein bzw. sich zu weniger als 50 % räumlich überschneiden. Insbesondere kann die Kameraeinrichtungen an unterschiedlichen und insbesondere gegenüberliegenden Seiten eines Fahrzeugs positioniert sein. Erfindungsgemäß wird jedoch ermöglicht, dass zum Beispiel dann, wenn aufgrund von Rangiermanövern bei einem Parkvorgang ein und derselbe Umgebungsbereich von unterschiedlichen Kameraeinrichtungen erfasst wird die hierfür vorliegenden Bildinformationen kombiniert betrachtet werden können bzw. aus den insgesamt vorliegenden Informationen ausfallen nach obigen Kriterien erfolgen können.

Ferner kann vorgesehen sein, dass die Umfeldkarte größer als ein auf einer Anzeigeeinrichtung anzeigbarer Ausschnitt der (texturierten) Umfeldkarte. Anders ausgedrückt kann die Umfeldkarte somit als digitales Modell und/oder Abbild gespeicherten vorzugsweise fortlaufend aktualisiert werden, auf der Anzeigeeinrichtung aber nur ausschnittsweise dargestellt werden. Dies hat den Vorteil, dass die Umfeldkarte auch in Bereichen abseits des dargestellten Ausschnitts bereits auswertbar ist oder deren Informationen anderweitig verwertbar sind.

Die Erfindung betrifft ferner eine Anordnung zum Erzeugen einer mit Bildinformationen texturierten Umfeldkarte eines Fahrzeugs, mit:
einer Erfassungseinrichtung zum Erfassen von wenigstens ersten und zweiten Bildinformationen von einer Fahrzeugumgebung; und
einer Umfeldkarten-Erzeugungseinrichtung, die dazu eingerichtet ist, eine Umfeldkarte des Fahrzeugs zu erzeugen (zum Beispiel basierend auf mittels oben genannte Sensoreinrichtung erfassten Informationen) und für wenigstens einen Bereich der Umfeldkarte, für den sowohl erste als auch zweite Bildinformationen vorliegen, für eine Texturierung der Umfeldkarte entweder die ersten oder die zweiten Bildinformationen ausgewählt wird,
wobei die aktuelleren Bildinformationen ausgewählt werden, und zwar dann, wenn das Fahrzeug einen vorgegebenen Entfernungsschwellwert zu dem Bereich unterschreitet.

Sämtliche der vorstehenden und nachstehenden im Zusammenhang mit dem Verfahren erläuterten Merkmale und Weiterbildungen können bei der Anordnung ebenfalls vorgesehen sein. Insbesondere kann die Anordnung dazu eingerichtet sein, ein Verfahren gemäß jeglicher der vorstehenden und nachstehenden Varianten auszuführen.

Weiter betrifft die Erfindung ein Fahrzeug, umfassend eine Anordnung der vorstehenden Art.

Abschließend ist darauf hinzuweisen, dass unter derm Erzeugen einer , sofern nicht anders angegeben oder ersichtlich, auch eine Aktualisierung einer bereits existierenden Umfeldkarte verstanden werden kann (also quasi ein Erzeugen einer aktuellen Umfeldkarte).

Im Folgenden wird ein Ausführungsbeispiel der Erfindung anhand der beigefügten schematischen Figuren erläutert. Es stellen dar:

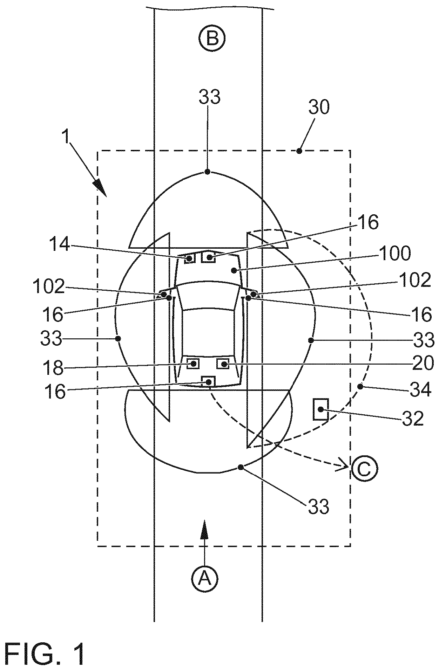

- Fig. 1: eine schematische Darstellung eines Fahrzeugs, umfassend eine Anordnung gemäß einem Ausführungsbeispiel der Erfindung, wobei die Anordnung ein erfindungsgemäßes Verfahren ausführt.

In Figur 1 ist ein Fahrzeug 100 schematisch angedeutet, das eine erfindungsgemäße Anordnung 1 umfasst. Eine Vorderseite bzw. Front des Fahrzeugs 100 weist in Richtung eines Bereichs B und eine Rückseite in Richtung des Bereichs A. An den die Einstiegstüren umfassenden Seiten des Fahrzeugs 100 sind Seitenspiegel 102 schematisch angedeutet.

An sämtlichen Seiten umfasst das Fahrzeug 100 (Umfeld-) Sensoreinrichtungen 14, wobei in Figur 1 lediglich für die Vorderseite eine entsprechende Sensoreinrichtung 14 dargestellt ist. Ferner umfasst das Fahrzeug 100 an sämtlichen Seiten Kameraeinrichtungen 16, insbesondere auch in beiden Seitenspiegeln 102. Die Fahrzeugumgebung es ist somit im Sinne einer 360°-Erfassung sowohl bildlich als auch mittels der Sensoreinrichtungen 14 vollständig erfassbar. Die Kameraeinrichtungen 16 und auch Sensoreinrichtungen 14 sind ferner derart angeordnet, dass sich die an Erfassungsbereich nur teilweise überschneiden und insbesondere diese zu weniger als 50 % und insbesondere weniger als 20 % räumlich deckungsgleich sind.

Die Sensoreinrichtungen 14 sind dazu eingerichtet, Umgebungsinformationen zum Erstellen einer Umfeldkarte zu erfassen. Im gezeigten Fall handelt es sich dabei um Ultraschallsensoren, wobei auch jegliche andere Sensorarten der einleitend genannten Art und auch Kombinationen hiervon innerhalb eines Fahrzeugs 100 eingesetzt werden können. Die Umfeldkarte wird als Datei enthaltend digitale Information fortlaufend aktualisiert und in einer Speichereinrichtung 18 des Fahrzeugs 100 abgelegt. In dem gezeigten Fall beschreibt die Umfeldkarte eine dreidimensionale Struktur der Fahrzeugumgebung.

Die Kameraeinrichtungen 16 sind jeweils als Videokamera ausgebildet und erfassen fortlaufend die Fahrzeugumgebung. Einen Video- beziehungsweise Bilddatenstrom einer jeden Kameraeinrichtungen 16 wird an eine Umfeldkarten-Erzeugungseinrichtung 20 übertragen, wie auch die von den Sensoreinrichtungen 14 erfassten Informationen. Die Umfeldkarte-Erzeugungseinrichtung 20 kann neben dem Erzeugen der Umfeldkarte auch weitere vorstehend sowie nachstehend erläuterte Funktionen bereitstellen und hierfür zum Beispiel entsprechende Programmanweisungen und/oder Verknüpfungen mit Einheiten des Fahrzeugs umfassen.

In Figur 1 ist das Fahrzeug in einen Zustand gezeigt, in dem es ausgehend von einem Bereich A zu einem Bereich B fährt. Die beiden Bereiche sind ca. 15 m voneinander beanstandet. Während dieser Fahrt würde die Umfeldkarte fortlaufend aktualisiert und werden fortlaufend Bildinformationen erfasst.

Insbesondere wird im vorliegenden Fall angenommen, dass der Bereich A als ein Startpunkt zum Erzeugen der Umfeldkarte ausgewählt ist, beispielsweise da dort das Fahrzeug eingeschaltet bzw. aktiviert wird (zum Beispiel per Zündung oder anderweitiger elektrischer Aktivierung) und/oder da in diesem Bereich ein Parkwunsch des Fahrers erkannt oder Benutzereingabe signalisiert wird, woraufhin eine Umfeldkarte Erzeugung gemäß der vorliegenden Variante aktiviert wird.

In dem Bereich A wird eine Fahrzeugposition zu Null gesetzt und auch die für den Parkvorgang erzeugte Umfeldkarte erstmals bzw. neu erstellt. Anschließend wird zum Beispiel basierend auf Odemtrieinformationen eine Bewegung des Fahrzeugs 100 erfasst und wird zum Beispiel ein Abstand und vorzugsweise auch eine Ausrichtung relativ zu dem Bereich A, der als eine Art Nullpunkt dient, ermittelt. Somit liegen für jeden Zeitpunkt auch Ortsinformationen des Fahrzeugs 100 vor.

Entsprechend können auch erfasste Bildinformationen und/oder Umfeldinformation der Sensoreinrichtungen und somit darauf basierend erstellte Bereiche der Umfeldkarte mit Ortsinformationen versehen werden. Sämtliche dieser Informationen können in der Speichereinrichtung 18 abgelegt werden, die auch Bestandteil der Umfeldkarten-Erzeugungseinrichtung 20 sein kann.

Im Ergebnis kann die Umfeldkarte-Erzeugungseinrichtung 20 somit auf Bildinformationen und Bereiche einer Umfeldkarte zurückgreifen, welche anhand der Ortsinformationen einander zugeordnet werden können oder, anders ausgedrückt, zwischen denen Korrespondenzen anhand der Ortsinformationen festgestellt werden können. Bildlich gesprochen können somit ermittelt werden, welche Bildinformationen sicher welche Bereiche der Umfeldkarte beziehen Beziehungsweise diese abbilden.

Da die Kameraeinrichtungen 16 fortlaufend Bildinformationen erzeugen, liegen somit auch sich auf unterschiedliche Zeitpunkte beziehende Bildinformationen für eine jede Kameraeinrichtungen 16 vor. Ist das Fahrzeug 100 in Bewegung, bilden diese Bildinformationen erwartungsgemäß unterschiedliche Bereiche der Umgebung und somit der Umfeldkarte ab. Wie nachstehend erläutert, können aber auch Fälle eintreten, bei denen die Bildinformationen zumindest teilweise übereinstimmende Bereiche der Umgebung und Umfeldkarte abbilden, sodass zwischen diesen eine Auswahl zum Texturierung der Umfeldkarte getroffen werden kann.

Wie vorstehend allgemein geschildert, kann unter dem texturierten ein abbilden Beziehung setze projizieren der Bildinformationen auf die Umfeldkarte verstanden werden. Dabei kann die Bildinformationen lediglich teilweise (d. h. lediglich Ausschnitte eines einzelnen Bildes) verwendet werden und es können allgemein auch Bildinformationen sämtlicher Kameraeinrichtungen 14 miteinander kombiniert werden. Sämtliche Bildinformationen beziehen sich dabei vorzugsweise auf einen übereinstimmenden Erfassungszeitpunkt.

Vorzugsweise wird die die Umfeldkarte vollständig texturiert, wobei jedoch lediglich nur ein schematisch angedeutete Ausschnitt 30 der texturierten Umfeldkarte auf einer Anzeigeeinrichtung im Fahrzeuginnenraum anzeigbar ist. Dieser Ausschnitt 30 wandert analog zur Fahrzeugbewegung innerhalb der Umfeldkarte und enthält das Fahrzeug 100 vorzugsweise stets mittig bzw. zentral. Zumindest dieser angezeigte Ausschnitt 30 wird vorzugsweise in der hierin geschilderten Weise texturiert. In an sich bekannter Weise kann der Ausschnitt 30 als eine sogenannte Bird-View-Perspektive oder auch Fahrzeugdraufsicht angezeigt werden, bei denen das Fahrzeug als Symbol eingeblendet wird. Beispiele vergleichbarer Darstellungen finden sich in den Bereichen 29a und 29d aus den Figuren 4 & 5 der o.g. DE 10 2015 002 438 A1.

In Figur 1 ist für jede der Kameraeinrichtungen 16 ein hochauflösend Erfassungsbereich mit einer durchgezogenen Linien markiert. Es handelt sich bei den Kameraeinrichtungen 16 jeweils um Weitwinkelkameraeinrichtungen, deren Blickwinkel zu dem zumindest teilweise eine Erfassung des Fahrzeug Untergrunds ermöglicht (d. h. auf den Fahrzeug untergrundgerichtetes). Zusätzlich weist jede Kameraeinrichtungen 16 eine niedrigauflösenden Erfassungsbereich auf, der zumindest teilweise für die in Figur 1 linke Kameraeinrichtungen 16 strichliert angedeutet ist. Man erkennt, dass nicht sämtliche Bereiche innerhalb des Ausschnitts 30 hochauflösend erfasst werden können und somit (zumindest bei einer erstmaligen Fahrt von dem Bereich A zu dem Bereich C) nicht für jeden Bereich der Umfeldkarte hochauflösende Bildinformationen zur Verfügung stehen.

Um dennoch eine die Aussagekraft der Umfeldkarte bzw. einer darauf basierend erzeugten und angezeigten Umgebung Repräsentation zu erhöhen, sind nachstehend erläuterte Möglichkeiten vorgesehen, die jeweils allein oder in beliebiger Kombination realisiert werden können.

Bei einer Fahrt von A nach B wird der Bereich B von der Kameraeinrichtungen 16 an der Vorderseite des Fahrzeugs 100 auch bereits am Startpunkt A erfasst, allerdings nur mit einer sehr niedrigen Auflösung. Für den Bereich B liegen somit zunächst nur niedrigaufgelöste Bildinformationen vor. Eine Texturierung der Umfeldkarte im Bereich B kann somit nur basierend auf entsprechend niedrig aufgelösten Bildinformationen erfolgen.

Wenn sich das Fahrzeug 100 aber in der Nähe vom Bereich B befindet und insbesondere derart, dass dieser innerhalb des hochauflösenden Erfassungsbereichs der Kameraeinrichtungen 16 liegt, liegen für den Bereich B hochaufgelöste Bildinformationen vor. Diese können anstelle der niedrig aufgelösten Bildinformationen für das Texturieren der Umfeldkarte verwendet werden. Insbesondere kann die Umfeldkarte bzw. deren Texturierung lokal überschrieben werden (d. h. im Bereich B überschrieben werden), sobald hochauflösende Bildinformationen für diesen Bereich B vorliegen.

Dass dies der Fall ist, kann zum Beispiel durch einen Vergleich der Auflösungen der insgesamt vorliegenden Bildinformationen ermittelt werden, welche (wie zum Beispiel basierend auf deren Ortsinformationen erkennbar) dem Bereich B zuzuordnen sind. Erfindungsgemäß kann jedoch festgestellt werden, dass der Bereich B in einem Abstand zu dem Fahrzeug 100 positioniert ist, der unterhalb einem Entfernungsschwellenwert liegt. Der Entfernungsschwellenwert ist dabei derart gewählt, dass er einer äußeren Grenze des hochauflösenden Erfassungsbereichs der vorderen Kameraeinrichtungen 16 entspricht. Ist dies der Fall, können automatischen vorderen Kameraeinrichtungen 16 entspricht. Ist dies der Fall, können automatischen vorzugsweise ohne nähere Ermittlungen oder Vergleiche unterschiedliche Auflösungen aktuell erfasste Bildinformationen verwendet werden, um die Umfeldkarte zu Texturierung, dann davon ausgegangen werden kann, dass diese mit einer hohen Auflösung erfasst werden.

Andererseits tritt der Fall auf, dass der Bereich A, wenn sich das Fahrzeug von diesen fortbewegt, zunächst in den hochauflösenden Erfassungsbereich der hinteren Kameraeinrichtungen 16 gelangt und bei Fortsetzen der Fahrt in Richtung des Bereichs B aus diesem heraus bewegt und somit nur noch mit einer niedrigen Auflösung erfassbar ist. Entsprechend kann auch vorgesehen sein, Entfernungsbetrachtungen bzw. den oben genannten Entfernungsschwellenwert nur in Fahrtrichtung zu betrachten, wobei sich aber auch um eine Rückwärtsfahrtrichtung handeln kann.

Zusätzlich kann vorgesehen sein, dass dann, wenn hochauflösende Bildinformationen (und insbesondere Bildinformationen mit einer Auflösung oberhalb einem vorbestimmten Schwellenwert) für einen Bereich der Umfeldkarte vorliegen diese zum Texturierung verwendet werden und nicht durch zu einem anderen Zeitpunkt erfasste Bildinformationen überschrieben werden. Liegen also einmal hochauflösenden Bildinformation für einen Bereich vor, kann das Ermitteln eventuell sogar höher aufgelöste Bildinformationen unterbunden werden.

Eine Ausnahme kann dann bestehen, wenn eine Veränderung in der Fahrzeug Umgebung erkannt wird, sowohl anhand der erfassten Bildinformationen als auch der (Umfeld-) Informationen erfolgen kann, die von den Sensoreinrichtungen 14 erfasst werden. In beiden Fällen kann zum Beispiel durch Änderung der jeweils ermittelten Informationen der Objektbewegung erkannt werden. Ist dies der Fall, können unabhängig von bevorzugten hohen Auflösungen aktuelle Bildinformationen für den entsprechenden Bereich zur Texturierung der Umfeldkarte ausgewählt werden, um dem Fahrer eine möglichst realitätsnahes Umgebungsrepräsentation anzeigen zu können. Das Erkennen und auch Darstellen von bewegten Objekten ist zudem sicherheitsrelevant und erhöht die Fahrsicherheit, wenn der Fahrer sich an der Umgebungsrepräsentation zum Beispiel während Einparkvorgängen orientiert.

Wie geschildert, es ist auch möglich, lediglich eines der Kriterien zu berücksichtigen, also ob für einen denselben Bereich höher aufgelöste Bildinformationen vorliegen, dass aktuell für eine Texturierung der Umfeldkarte verwendet werden, oder aber aktuellere Bildinformationen, als die aktuell für die Texturierung verwendeten Bildinformationen.

Anhand von Figur 1 wird im Folgenden noch ein weiteres Beispiel für die Auswahl von Bildinformation zur Texturierung der Umfeldkarte geschildert. In Figur 1 ist ferner ein Bereich C gezeigt. Dieser entspricht einem Bereich, zu dem der Fahrer ausgehend von der dargestellten Position das Fahrzeug 100 bewegen können, beispielsweise im Rahmen eines rückwärts-eine Parkvorgangs in eine nicht gesondert dargestellte in Figur 1 horizontal verlaufende Parklücke.

Ferner dargestellt ist ein statisches Objekt, wie zum Beispiel ein Pfeiler 32. dieser befindet sich zunächst in einem niedrigauflösenden Erfassungsbereich der in Figur 1 linken Kameraeinrichtungen 16 und es auch derart positioniert, dass bei der Fahrt ausgehend von dem Bereich A noch keine hochauflösenden Bildinformation hierfür erfasst wurden. Die Umfeldkarte wird somit in dem den Pfeiler 32 enthaltenden Bereich zunächst basierend auf niedrig aufgelösten Bildinformationen texturiert.

Bewegt sich das Fahrzeug 100 nun rückwärts gemäß dem strichlierten Pfeil in den Bereich C, würde der Pfeiler 32 in den hochaufgelösten Erfassungsbereich der linken Kameraeinrichtungen 16 gelangen. Die Umfeldkarten-Erzeugungseinrichtung 20 würde dies entweder durch einen Vergleich der für diesen Bereich insgesamt vorliegenden Bildinformationen erkennen oder aber durch das vorstehend geschilderte unterschreiten eines Entfernung Schwellenwert relativ zu dem den Pfeiler 32 enthaltenden Bereich. Somit kann also einer aktuelle Texturierung der Umfeldkarte in dem dem Pfeiler 32 enthaltenden Bereich lokal mit hochaufgelösten Bildinformationen überschrieben werden. Dies unterstützt den Fahrer beim Einparkvorgang, wenn er sich an der ihm angezeigten Umgebungsrepräsentation orientieren möchte.

### Bezugszeichenliste

- 1: Anordnung
- 14: Kameraeinrichtung
- 16: Bordstein
- 18: Speichereinrichtung
- 20: Umfeldkarten-Erzeugungseinrichtung
- 30: Ausschnitt
- 32: Pfeiler
- 100: Fahrzeug
- 102: Seitenspiegel
- A, B, C: Bereiche

## Patentansprüche

1. Verfahren zum Erzeugen einer mit Bildinformationen texturierten Umfeldkarte eines Fahrzeugs (100), mit:
Erfassen von wenigstens ersten und zweiten Bildinformationen zu verschiedenen Zeitpunkten von einer Fahrzeugumgebung mit wenigstens einer fahrzeugmontierten Kameraeinrichtung (16);
Erzeugen einer Umfeldkarte des Fahrzeugs (100);
Ermitteln von wenigstens einem Bereich der Umfeldkarte, für den sowohl die ersten als auch zweiten Bildinformationen vorliegen; und
Auswählen von entweder den ersten oder den zweiten Bildinformationen für eine Texturierung dieses Bereichs der Umfeldkarte,
**gekennzeichnet dadurch, dass** die aktuelleren Bildinformationen ausgewählt werden, und zwar dann, wenn das Fahrzeug (100) einen vorgegebenen Entfernungsschwellenwert zu dem Bereich unterschreitet.

2. Verfahren nach Anspruch 1,
wobei die aktuelleren Bildinformationen auch dann verwendet werden, wenn innerhalb des Bereichs eine Veränderung der Fahrzeugumgebung und/oder ein vorbestimmtes Objekt in der Fahrzeugumgebung erkannt wird.

3. Verfahren nach Anspruch 1 oder 2,
wobei der Entfernungsschwellenwert in Fahrtrichtung betrachtet wird.

4. Verfahren nach einem der vorangehenden Ansprüche,
wobei die Umfeldkarte während einer Fahrt des Fahrzeugs (100) erzeugt wird.

5. Verfahren nach einem der vorangehenden Ansprüche,
wobei die Umfeldkarte größer als ein auf einer Anzeigeeinrichtung anzeigbarer Ausschnitt der Umfeldkarte ist.

6. Anordnung (1) zum Erzeugen einer mit Bildinformationen texturierten Umfeldkarte eines Fahrzeugs (100), mit:
einer Kameraeinrichtung (16) zum Erfassen von wenigstens ersten und zweiten Bildinformationen zu verschiedenen Zeitpunkten von einer Fahrzeugumgebung; und
einer Umfeldkarten-Erzeugungseinrichtung (20), die dazu eingerichtet ist, eine Umfeldkarte des Fahrzeugs (100) zu erzeugen und für wenigstens einen Bereich der Umfeldkarte für eine Texturierung der Umfeldkarte entweder die ersten oder die zweiten Bildinformationen auszuwählen,
**gekennzeichnet dadurch, dass** die aktuelleren Bildinformationen ausgewählt werden, wenn das Fahrzeug (100) einen vorgegebenen Entfernungsschwellenwert zu dem Bereich unterschreitet.

7. Fahrzeug (100),
umfassend eine Anordnung (1) nach Anspruch 6.

## Claims

1. Method for generating a surroundings map of a vehicle (100) textured with image information, comprising:
capturing at least first and second image information at different times from a vehicle environment with at least one vehicle-mounted camera device (16);
generating a surroundings map of the vehicle (100);
determining at least one region of the surroundings map for which both the first and second image information are available; and
selecting either the first or the second image information for texturing this region of the surroundings map,
**characterized in that** the more current image information is selected when the vehicle (100) falls below a predetermined distance threshold to the region.

2. Method according to claim 1,
wherein the more current image information is also used if a change in the vehicle environment and/or a predetermined object in the vehicle environment is detected within the region.

3. Method according to either claim 1 or claim 2,
wherein the distance threshold is viewed in the direction of travel.

4. Method according to any of the preceding claims,
wherein the surroundings map is generated during a journey of the vehicle (100).

5. Method according to any of the preceding claims,
wherein the surroundings map is larger than a portion of the surroundings map that can be displayed on a display device.

6. Arrangement (1) for generating a surroundings map of a vehicle (100) textured with image information, comprising:
a camera device (16) for capturing at least first and second image information at different times from a vehicle environment; and
a surroundings map generating device (20) which is designed to generate a surroundings map of the vehicle (100) and to select either the first or the second image information for at least one region of the surroundings map for texturing the surroundings map,
**characterized in that** the more current image information is selected when the vehicle (100) falls below a predetermined distance threshold to the region.

7. Vehicle (100),
comprising an arrangement (1) according to claim 6.

## Revendications

1. Procédé permettant la génération d'une carte d'environnement texturée avec des informations d'image d'un véhicule (100), comportant :
la détection d'au moins de premières et de secondes informations d'image à différents moments d'un environnement de véhicule avec au moins un dispositif formant caméra (16) monté sur le véhicule ;
la génération d'une carte d'environnement du véhicule (100) ;
la détermination d'au moins une zone de la carte d'environnement pour laquelle à la fois les premières et les secondes informations d'image sont disponibles ; et
la sélection soit des premières soit des secondes informations d'image pour texturer ladite zone de la carte d'environnement,
**caractérisé en ce que** les informations d'image plus actuelles sont sélectionnées, à savoir, lorsque le véhicule (100) n'atteint pas une valeur seuil de distance prédéfinie par rapport à la zone.

2. Procédé selon la revendication 1,
dans lequel les informations d'image plus actuelles sont également utilisées lorsqu'une modification de l'environnement de véhicule et/ou qu'un objet prédéfini dans l'environnement de véhicule sont reconnus à l'intérieur de la zone.

3. Procédé selon la revendication 1 ou 2,
dans lequel la valeur seuil de distance est considérée dans le sens de conduite.

4. Procédé selon l'une des revendications précédentes,
dans lequel la carte d'environnement est générée pendant une conduite du véhicule (100).

5. Procédé selon l'une des revendications précédentes,
dans lequel la carte d'environnement est plus grande qu'une découpe de la carte d'environnement pouvant être affichée sur un dispositif d'affichage.

6. Système (1) permettant la génération d'une carte d'environnement texturée avec des informations d'image d'un véhicule (100), comportant :
un dispositif formant caméra (16) permettant la détection d'au moins de premières et de secondes informations d'image à différents moments d'un environnement de véhicule ; et
un dispositif de génération de carte d'environnement (20) configuré pour générer une carte d'environnement du véhicule (100) et pour sélectionner, pour au moins une zone de la carte d'environnement, soit les premières, soit les secondes informations d'image pour texturer la carte d'environnement,
**caractérisé en ce que** les informations d'image plus actuelles sont sélectionnées lorsque le véhicule (100) n'atteint pas une valeur seuil de distance prédéfinie par rapport à la zone.

7. Véhicule (100),
comprenant un système (1) selon la revendication 6.
